# EUROPÄISCHE PATENTANMELDUNG

(11) **EP 2 045 536 A2**
(43) Veröffentlichungstag der Anmeldung: **08.04.2009**
(21) Anmeldenummer: 08017333.9
(22) Anmeldetag: 02.10.2008
(51) Int. Cl.: F24D 3/16, F24F 5/00, F24F 13/068

(54) **Kühl-, Heiz- und Akustikplattenelement**

(30) Priorität: 05.10.2007 DE 102007047750
(71) Anmelder: ClimaDomo Heiz- und Kühlsysteme GmbH, 99635 Kölleda (DE)
(72) Erfinder: Funk, Klaus, 99610 Sömmerda (DE)
(74) Vertreter: Stern, Wolfgang

(57) **Zusammenfassung**

Ein Kühl-, Heiz- und Akustikplattenelement, bestehend aus einer matrixförmig gelochten Platte, vorzugsweise aus Gips, und einem Rohrleitungssystem in Mattenform, in der ein Wärmeträgermedium geführt wird, wobei in der Platte Ausnehmungen für die Rohrleitungen vorgesehen sind, ist **dadurch gekennzeichnet, dass** die gelochte Platte (1) rückseitig parallel eingeformte oder mechanisch ausgearbeitete Schlitze (2) zur Aufnahme von im geringen Abstand - vorzugsweise 10 bis 30 mm - angeordneten, äquidistant geführten Kapillarrohren (3) gleicher Länge mit dem Außendurchmesser von 3 bis 6 mm aufweist, wobei die Kapillarrohre (3) an ihren Enden mit quer liegenden Rohren (4; 5) für Vor- und Rücklauf miteinander verbunden und die Kapillarrohre (3) mindestens am halben Umfang durch Eindrücken in die Schlitze (2) formschlüssig mit der Platte (1) verbunden sind. Alternativ sind die Kapillarrohre (3) durch Einformen mittels wärmeleitendem, aushärtenden Füllmaterial (6) in den Schlitzen (2) stoffschlüssig mit der Platte verbunden.

## Beschreibung

Die Erfindung betrifft ein werkseitig vorgefertigtes Kühl-, Heiz- und Akustikplattenelement zur Temperierung eines Raumes. Mehrere dieser Plattenelemente werden zu einer Fläche zusammen gefügt und an ein mit einem Wärmeträgermedium - in der Regel ist dies Wasser - gefülltes Heiz- oder Kühlsystem angeschlossen. Zum Kühlen oder Heizen strömt ein kaltes oder warmes Wärmeträgermedium durch die mit dem Plattenelement Kapillarrohre in Mattenform. Die entsprechenden Flächen werden dabei gleichmäßig temperiert und sorgen für eine schnelle und hochkomfortable Abführung der Kühllasten bzw. Zuführung des Wärmebedarfs zu ca. 60 Prozent über Strahlung und zu ca. 40 Prozent über Konvektion.
Konventionelle Klimaanlagen, die über die Luft die Kühllasten abführen, schränken durch die mit dieser Technik verbundenen Luftbewegungen (Zug) und Geräuschentwicklungen das Wohlbefinden in den betreffenden Räumen erheblich ein. Des Weiteren sind bei mangelhafter Wartung/Reinigung des kompletten Lüftungssystems gesundheitliche Risiken für die Nutzer nicht ausgeschlossen (Sick Building Syndrom). Ein weiterer Nachteil ist der im Vergleich zu Wassersystemen aufgrund der für die Ventilatoren benötigen Antriebsenergie deutlich höhere Stromverbrauch von konventionellen, als Wärmeträger die Luft nutzenden Klimaanlagen.

Es sind daher aktiv regelbare Kühl- und Heizsysteme entwickelt worden, bei denen die Wärmeübertragung über raumnah in die Oberfläche der Raumumschließungsflächen integrierte Rohrschlangen bzw. Kapillarrohrmatten realisiert wird.
Hierbei werden im Wesentlichen folgende Systeme unterschieden:
1. Kapillarrohrmatten bzw. Rohrschlangen werden direkt unterhalb der Roh-Betondecken in einer Putzschicht integriert.
   Nachteilig dabei ist, dass diese Ausführung neben einer sehr aufwändigen Gewerke-Koordination zwischen dem Anlagenbau und dem Putz eine sehr sorgfältige Verlegung benötigt. Des Weiteren steht kein nutzbarer Deckenhohlraum zur Verfügung, und es entsteht eine schallharte Deckenfläche ohne jede akustischen Eigenschaften.
2. Kapillarrohrmatten bzw. Rohrschlangen werden unterhalb einer abgehängten Gipskarton- oder Trockenbaudecke in einer Putzschicht integriert.
   Nachteilig dabei ist, dass diese Ausführung neben einer sehr aufwändigen Gewerke-Koordination zwischen dem Anlagenbau und dem Putz eine sehr sorgfältige Verlegung benötigt. Des Weiteren entsteht eine schallharte Deckenfläche ohne jede akustischen Eigenschaften.
3. Kapillarrohrmatten bzw. Rohrschlangen mit und ohne Aluminium-Wärmeleitprofilen werden so zwischen den Profilen der Decken-Unterkonstruktion montiert, dass sie hinreichenden Kontakt zu den später vom Trockenbauer darunter montierten gelochten oder ungelochten Gipskarton- oder Trockenbau-Verkleidungsplatten haben. Neben der Problematik eines selbst bei fachgerechter Montage nicht immer hundertprozentig reproduzierbaren Wärmeübergangs zwischen Kühl-/Heizelement und der Trockenbauplatte und der daraus resultierenden Gefahr einer Minderleistung ist noch nachteilig, dass die getrennte Montage von Kühl-/Heizsystem und dem Verkleidungsplatten Mehrkosten verursacht und bei der Montage der Verkleidungsplatten durch den Trockenbauer das Rohrsystem beschädigt werden kann. Des Weiteren sind speziell in Kombination mit akustisch wirksamen Lochplatten oftmals keine ausreichenden Kühlleistungen realisierbar.
4. Kapillarrohrmatten bzw. Rohrschlangen mit und ohne Aluminium-Wärmeleitprofilen werden in Metall-Deckenplatten eingeklebt, eingelegt oder mittels Magnettechnik fixiert. Nachteilig dabei ist neben den hohen Materialkosten für die Metalldecke sowie dem hohen Aufwand für die i. d. R. bauseitige Integration des Kühl-/Heizelementes in die Deckenplatten insbesondere die Tatsache, dass sich hiermit zwar akustisch wirksame, aber aufgrund der zwangsläufigen Segmentierung nicht die häufig vom Architekten/Bauherrn gewünschten fugenlosen Decken herstellen lassen.

In weiteren Veröffentlichungen sind dazu folgende Details bekannt geworden:
In der DE 94 10 695.9 sind die Kühlelemente in einzelnen Stahlrahmen angeordnet, die an der Unterkonstruktion über Scharniere schwenkbar befestigt sind, um nach einer Montage wieder eine bessere Zugänglichkeit des Rohrsystems zu erreichen. Die einzelnen Kühlelemente oder -matten sind dazu untereinander bzw. über eine Sammelschiene an Verbindungsleitungen angeschlossen. Nachteilig dabei sind das Erfordernis von Metallrahmenkonstruktionen mit Scharnieren und ein hoher Montageaufwand, wobei die vorgenannten Nachteile der nachträglichen Montage der Abdeckplatten nicht beseitigt sind.
In der DE 296 08 709 U1 ist ein Heizkörper als Wandelement für den Trockenbau beschrieben, bei dem Metallrohre in einer in der Verkleidungsplatte vorgefertigten mäanderförmigen Rinne oder Nut eingelegt und mit einer Blechplatte abgedeckt sind. Die Blechplatte dient dabei als Konvektor für einen besseren Wärmeübergang. Die Blechplatte wiederum ist mit einer Sperrholzplatte oder einer Gipskarton-Platte verbunden. Nachteilig dabei sind die Aufwendungen für die Einbringung des mäanderförmigen Profils der Rinne in die vordere Gipskartonplatte, sowie der hohe Montageaufwand für das Einlegen der flexiblen Heizrohre in die Nuten.
In der DE 295 02 445.3 U1 wird eine Kühldecke beschrieben, die insbesondere als abgehängte Kühldecke aus einzelnen Plattenelementen besteht. Die Kühlrohre sind dazu bereits bei der Fertigung der Gipskartonplatte in diese eingeformt und vollständig von der Gipskartonplatte umschlossen und an deren Oberfläche nicht mehr sichtbar. Zur Verstärkung dieser speziellen Platte ist eine weitere handelsübliche Gipskartonplatte aufgelegt und insgesamt in diesem Verbund mit einer Metallummantelung versehen.
Diese Lösung ist speziell für abgehängte Decken vorgesehen und hinsichtlich der Metallummantelung zwar dekorativ, aber sehr aufwendig. Für Niedrigdecken ist die Konstruktion nicht geeignet, da alle Rohrverbindungen über der Plattenebene erfolgen.
In der WO 98/11390 wird eine abgehängte Kühldecke beschrieben, die mittels eines Tragsystems an einer bestehenden Decke angebracht wird, indem zunächst eine obere Trockenbauplatte befestigt wird, an die danach Abstandhalter angeschraubt werden. Anschließend werden die Kühlrohrmatten vereinzelt in Gruppen- oder Matrixform unterhalb der Trockenbauplatte angebracht und deren Anschlüsse durch die obere Platte nach oben geführt und oberhalb der Trockenbauplatte an die Ablauf- bzw. Zulaufrohre für die Kühlflüssigkeit angeschlossen. Anschließend wird eine untere Trockenbauplatte mit halber Plattenbreite versetzt zur oberen die Kühlrohrmatten tragende Platte befestigt. Bezüglich der Rohrdurchführungen nach oben kann dabei keine Brandschutzklasse mehr gewährleistet werden. Außerdem wird zusätzlich Platz zur Rohdecke benötigt. Beim Verschrauben der unteren Trockenbauplatte können Beschädigungen der nicht sichtbaren Kapillarrohrmatten nicht ausgeschlossen werden. Ein nachträglicher Service bzw. der Austausch von defekten Platten ist nur erschwert möglich.
In der DE 101 58 054 B4 wird ein Deckenelement beschrieben, in dem Ausnehmungen für mäanderförmige Rohrleitungen eingefräst sind und der Vor- und Rücklauf eines jeden Deckenelementes aus dem Raum geführt und an einen außerhalb des Raumes befindlichen Verteiler angeschlossen wird. Die mäanderförmigen Ausnehmungen in der Deckenplatte für die Rohrleitung haben den Nachteil, dass sie einen relativ großen Abstand zueinander aufweisen. Außerdem sind die Einbringung von mäanderförmigen Ausnehmungen technologisch aufwendig..
In der DE 10 2005 005 385 B3 mit nut- und mäanderförmigen Vertiefungen werden die in die Nut eingelegte Rohrleitung mit einem beschichteten Textilgewebe abgedeckt. Die Anschlüsse für Vor- und Rücklauf erfolgen von Platte zu Platte. Nachteilig ist auch hier die Einarbeitung einer mäanderförmigen Nut.

Der Erfindung liegt die Aufgabe zugrunde, ein Kühl-, Heiz- und Akustikplattenelement zur Temperierung eines Raumes zu entwickeln, das insbesondere bei Verwendung von Gipskarton auch bei gelochten Platten trotz hervorragenden akustischen Eigenschaften einen hohen wärmetechnischen Wirkungsgrad aufweist, und das aufgrund der Möglichkeit einer kompletten werkseitigen Vorfertigung den Montageaufwand sowie die Gefahr einer Beschädigung auf der Baustelle minimiert.

Die Aufgabe der Erfindung wird gelöst durch die Verwendung von Kapillarrohrmatten mit einer Vielzahl parallel angeordneter flexibler Kapillarrohre, die an beiden Enden durch ein gemeinsames Rohr für den Vorlauf und ein gemeinsames Rohr für den Rücklauf verbunden sind, sowie einer matrixförmig gelochten Platte, vorzugsweise einer Gipskartonplatte, mit parallel und äquidistant angeordneten einzelnen nicht miteinander verbundenen Schlitzen. Die Schlitze sind so eingearbeitet, dass die Kapillarrohre der Kapillarmatten in den Schlitzen weitgehend flächenförmig und formschlüssig anliegen. Die gemeinsamen Rohre für Vorlauf und für den Rücklauf liegen auf der Plattenrückseite auf. Zur Stabilisierung der Gipskartonplatte können auf der Rückseite der Gipskartonplatte in weiten Abständen Querrippen angeordnet sein, die wiederum aus Streifen einer Gipskartonplatte gefertigt sind. Mit einer Gaze aus Gewebe auf der Rückseite der Gipskartonplatte können die Kapillarrohre in der Platte gesichert bzw. fixiert werden. Die außen liegenden Querrippen sind an ihren Enden verkürzt, so dass sie nicht über die gesamte Gipskartonplatte ragen. Die einzelnen Schlitze für die Kapillarrohrmatten, die z.B. mit Scheibenfräsern in die Platte eingebracht werden, haben einen Abstand von vorzugsweise 10 bis 30 mm. Der Vorteil besteht in der einfachen Einformung der parallelen Schlitze.

In einer weiteren Lösung sind die Schlitze für die Kapillarrohre tiefer in die Platte eingeformt, so dass über den eingelegten Kapillarrohren ein aushärtendes Füllmaterial flächenabschließend eingebracht werden kann, damit zwischen der Platte und den Kapillarrohren eine stoffschlüssige Verbindung entsteht.

Ein weiteres Merkmal besteht darin, dass die matrixförmig gelochte Platte durch eine an der Oberfläche geschlitzte Platte für den Schallschutz ersetzt wird.

Der der Erfindung zugrunde liegende Gedanke wird in der folgenden Beschreibung von Ausführungsbeispielen anhand von Zeichnungen näher erläutert.
Dabei zeigen:
- Fig. 1: eine Gesamtansicht auf die Rückseite des Kühl-, Heiz- und Akustikplattenelementes;
- Fig. 2: eine Schnitt-Darstellung AA durch das Kühl-, Heiz- und Akustikplattenelement gemäß Fig. 1;
- Fig. 3: eine Schnitt-Darstellung BB durch das Kühl-, Heiz- und Akustikplattenelement gemäß Fig. 1;
- Fig. 4: einen Längsschnitt CC durch das Plattenelement gemäß Fig. 1;
- Fig. 5: eine Gesamtansicht auf die Rückseite des Kühl-, Heiz- und Akustikplattenelementes mit tiefergelegten Kapillarrohrmatten (Alternative);
- Fig. 6: eine Schnitt-Darstellung AA der Platte gemäß Fig. 5;
- Fig. 7: eine Schnitt-Darstellung BB der Platte gemäß Fig. 5 mit Füllmaterial abgedeckten Kapillarrohrmatten;
- Fig. 8: einen Längsschnitt CC durch das Plattenelement gemäß Fig. 5;

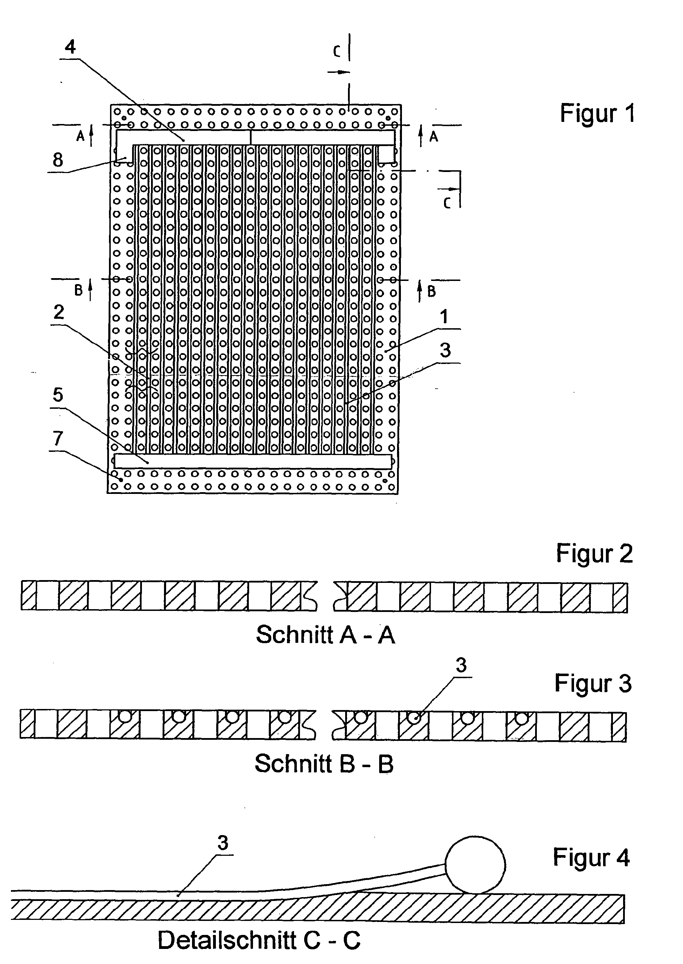

Das Kühl-, Heiz- und Akustikplattenelement ist in Fig.1 von seiner Rückseite dargestellt. Die Platte 1 ist zur Erreichung guter akustischer Werte in bekannter Weise matrixförmig gelocht. Zwischen den Lochreihen sind parallele Schlitze 2 eingeformt, deren Breite und Tiefe dem Durchmesser der verwendeten Kapillarrohre 3 entsprechen und diese bei Montage formschlüssig aufnehmen. Der Abstand der Schlitze zueinander beträgt vorteilhaft 10 bis 30 mm und ist auf das Lochbild der verwendeten Lochplatten abgestimmt. Die Schlitze 2 laufen vor den beiden Enden der Platte 1 zur Plattenoberfläche aus oder verlaufen bis zum Ende der Platte. Das Verteilrohr 4 und das Sammelrohr 5 der Kapillarrohrmatten liegen auf der Plattenoberfläche auf. Zur fluidtechnischen Verbindung der Platten 1 untereinander sind die Anschlüsse 8 in der Plattenebene angeordnet. Zur Montage des Kühl-, Heiz-und Akustikplattenelementes an der Raumdecke sind zwischen den Lochreihen für den Schallschutz mehrere Befestigungslöcher 7 eingebracht.
In Fig. 2 ist in einem Schnitt AA gem. Fig. 1 durch die Platte 1 die Verteilung der Löcher 9 für den Schallschutz erkennbar.
In Fig. 3 ist in einem Schnitt BB gem. Fig. 1 durch die Platte 1 die Anordnung der Schlitze 2 zur Aufnahme der Kapillarrohrmatten 3 zwischen den Lochreihen dargestellt.
In Fig. 4 ist in einem Längsschnitt CC gemäß Fig. 1 durch die Platte 1 die Verbindung der Kapillarrohrmatten 3 mit der Platte 1 verdeutlicht. Während die Kapillarrohrmatte 3 formschlüssig mit der Platte 1 verbunden ist, ragen das an den Enden der Kapillarrohre 3 angeordnete Verteilrohr 4 und Sammelrohr 5 für Vor- und Rücklauf aus der Plattenebene heraus und liegen auf der Rückseite der Platte 1 auf.

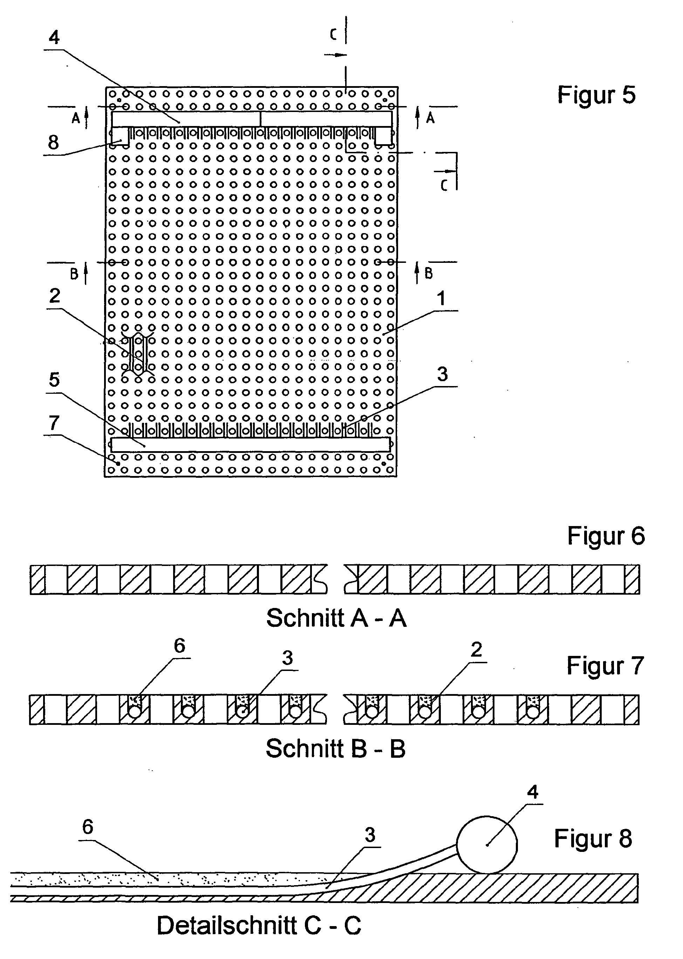

In Fig. 5 ist eine alternative Lösung für das Kühl-, Heiz- und Akustikplattenelement dargestellt. Die beschriebenen u-förmigen Schlitze 2 für die Kapillarrohrmatten 3 sind hier wesentlich tiefer in die Platte 1 eingeformt, so dass auch die Kapillarrohre 3 tiefer in die Platte 1 eingedrückt werden können. Der bestehende freie Raum über den Kapillarrohren 3 wird mit einem aushärtenden Füllmaterial 6 ausgefüllt, so dass zwischen Kapillarrohrmatte 3 und der Platte 1 eine stoffschlüssige Verbindung entsteht. Mit dieser alternativen Lösung wird ein effektiverer Wärmeaustausch mit der Raumluft erreicht.
In Fig. 6 ist in einem Schnitt AA gem. Fig. 5 durch die Platte 1 wiederum die Verteilung der Löcher 9 für den Schallschutz erkennbar.

In Fig. 7 und Fig. 8 sind die tiefer in den Schlitzen 2 liegenden Kapillarrohre 3 und das die Schlitze 2 auffüllende Füllmaterial 6 deutlicher dargestellt.

## Patentansprüche

1. Kühl-, Heiz- und Akustikplattenelement, bestehend aus einer matrixförmig gelochten Platte, vorzugsweise aus Gips, und einem Rohrleitungssystem in Mattenform, in der ein Wärmeträgermedium geführt werden kann, wobei in der Platte Ausnehmungen für die Rohrleitungen vorgesehen sind, **dadurch gekennzeichnet, dass** die gelochte Platte (1) rückseitig parallel eingeformte oder mechanisch ausgearbeitete Schlitze (2) zur Aufnahme von im geringen Abstand - vorzugsweise 10 bis 30 mm - angeordneten, äquidistant geführten Kapillarrohren (3) gleicher Länge mit dem Außendurchmesser von 3 bis 6 mm aufweist, wobei die Kapillarrohre (3) an ihren Enden mit quer liegenden Rohren (4; 5) für Vor- und Rücklauf miteinander verbunden sind.

2. Kühl-, Heiz- und Akustikplattenelement gemäß Anspruch 1, **dadurch gekennzeichnet, dass** die Kapillarrohre (3) mindestens am halben Umfang durch Eindrücken in die Schlitze (2) formschlüssig mit der Platte (1) verbunden sind.

3. Kühl-, Heiz- und Akustikplattenelement gemäß Anspruch 1, **dadurch gekennzeichnet, dass** die Kapillarrohre (3) durch Einformen mittels wärmeleitendem, aushärtendem Füllmaterial (6) in den Schlitzen (2) stoffschlüssig mit der Platte (1) verbunden sind.

4. Kühl-, Heiz- und Akustikplattenelement gemäß Anspruch 1, **dadurch gekennzeichnet, dass** die Kapillarrohre (3) am Wassereintritt mit einem Verteilrohr (4) und am Wasseraustritt mit einem Sammelrohr (5) dauerhaft verbunden sind und die Kapillarrohre (3) vom Wärmeträgermedium wärmetechnisch vorteilhaft in gleicher Richtung bezogen auf die Platte durchströmt werden.

5. Kühl-, Heiz- und Akustikplattenelement gemäß Anspruch 1, **dadurch gekennzeichnet, dass** die Platte (1) vorgebohrte Befestigungslöcher (7) aufweist.

6. Kühl-, Heiz- und Akustikplattenelement gemäß Anspruch 1, **dadurch gekennzeichnet, dass** das Kühl-, Heiz- und Akustikplattenelement ohne Befestigungslöcher in eine Konstruktion eingelegt, eingeschoben, eingeklemmt oder aufgelegt ist.

7. Kühl-, Heiz- und Akustikplattenelement gemäß Anspruch 1, **dadurch gekennzeichnet, dass** die Platte ungelocht ist.

8. Kühl-, Heiz- und Akustikplattenelement gemäß Anspruch 7, **dadurch gekennzeichnet, dass** die Platte (1) schallschluckende Schlitze aufweist.
